# EUROPEAN PATENT APPLICATION

(11) **EP 4 635 936 A1**
(43) Date of publication of application: **22.10.2025**
(21) Application number: 23899148.3
(22) Date of filing: 04.12.2023
(51) Int. Cl.: C05G 3/00, C05B 9/00, C05B 17/00, C05F 5/00, C05F 11/08

(54) **BIOFERTILISER COMPOSITION COMPRISING THERMOPHOSPHATE DISPERSED IN EMULSIFIED OIL OR IN HUMIC AND FULVIC ACIDS**

(30) Priority: 06.12.2022 BR 102022024883; 18.10.2023 BR 132023021608
(71) Applicant: Keller & Sohne Australia Pty Ltd, Saratoga NSW 2251 (AU)
(72) Inventor: Pinto Keller, Rodolfo Oliveira, 80.030-230 Curitiba (BR)
(74) Representative: Potter Clarkson
(86) International application number: PCT/BR2023/050428
(87) International publication number: WO 2024/119253

(57) **Abstract**

The invention comprises a set of chemical components, especially used oil from domestic or industrial fryers, as well as humic and fulvic acids, with micro and nano particles of thermophosphate (fused phosphate) in dispersion. This dispersion will then be diluted in water for application by spraying in planting furrows or directly on plants as a foliar fertiliser. The composition of this invention also contains microbial inoculants because it is not harmful to same and even serves as a nutrient therefor. This invention therefore pertains to the field of chemicals and fertilisers. In one embodiment, the fertiliser composition is characterised in that it comprises, in percentage by weight (wt%): a) from 40 to 60 wt% micro and nano comminuted thermophosphate; b) from 30 to 40 wt% vegetable oil from domestic or industrial fryers; c) from 2 to 5 wt% emulsifier: polysorbate 80; d) from 2 to 5 wt% thickener: fumed silica or organophilic bentonites; e) from 2 to 5 wt% microbial inoculants (fungi and bacteria). In another embodiment, the fertiliser composition is characterised in that it comprises, in percentage by weight (wt%): a) from 40 to 60 wt% micro and nano comminuted thermophosphate; b) from 30 to 40 wt% humic and fulvic acids ; c) from 2 to 5 wt% emulsifier: polysorbate 80; d) from 2 to 5 wt% thickener: fumed silica or organophilic bentonites; e) from 2 to 5 wt% microbial inoculants (fungi and bacteria).

## Description

For the purpose of filing in other countries via the PCT, this Specification consolidates the contents of the specifications of BR10 2022 024883 4, filed on 06/12/2022, and its addition certificate BR 13 2023 021608 0, filed on 18/10/2023.

### Field of invention

The invention "COMPOSITION OF BIOFERTILISER COMPRISING FUSED PHOSPHATE DISPERSED IN EMULSIFIED OIL" comprises a set of chemical components, especially the used oil of homemade or industrial frying with micro and nano particles of fused phosphate (fused phosphate) in dispersion.

This dispersion will later be diluted in water for application by spraying into planting furrows or directly onto plants as a foliar fertiliser.

Therefore, this invention belongs to the field of chemistry, more specifically to fertilisers.

### Fundamentals of invention

For proper understanding of this document, we present the interpretation of the terms used, in the form of a glossary, which must therefore be used when analysing this description, the set of claims, and the abstract of the invention.

Polysorbate 80 (polyoxyethylene (20) sorbitan monooleate) is a surfactant and emulsifier frequently used in the production of food and cosmetics.

Bio-inputs encompass everything from inoculants, plant growth promoters, biofertilisers, products for plant and animal nutrition, plant extracts, and pest control products made from beneficial microorganisms (such as fungi, bacteria, and mites), to phytotherapeutic products or technologies that contain biological actives, whether for plants and animals or for processing and post-harvest.

Biological inputs (or bio-inputs) are products made from microorganisms, plant-based, organic or natural materials, and used in agricultural cultivation systems to combat pests and diseases and/or to improve soil fertility and nutrient availability for plants.

Due to their low toxicity and biodegradability, this type of input promotes sustainable agriculture and reduces impacts compared to common agrochemicals.

Examples of bio-inputs include: a) biological control agents: living organisms that naturally control pests as predators or natural enemies; b) biostimulants: products made from natural substances that can be applied to seeds, soil or plants to improve performance, germination, root development, and other physiological processes in plants; c) biofertilisers: products composed of active components or organic substances of animal, plant, or microbial origin that increase plant productivity and quality; d) biological environment conditioners: substances that enhance microbiological activity in production environments; e) biological inoculants: use of microorganisms aimed at intensifying the natural process of biological nitrogen fixation and other beneficial characteristics for plant development.

A microorganism is the name given to all organisms composed of a single cell that cannot be seen with the naked eye and are only visible under a microscope. In this invention, the microorganisms in question are inoculants, such as fungi (e.g., mycorrhizae) and bacteria (e.g., Rhizobium and Azospirillum).

Thermophosphate (in English, fused phosphate) refers to magnesium and/or potassium thermophosphates with other nutrient minerals fused (primarily phosphorus, calcium, magnesium, manganese, zinc, copper, boron, iron, nickel, potassium, and silicon) into the same molecule and/or added separately, such as sulfur, for example.

Micro- and nano-ground/crushed thermophosphate refers to thermophosphate that has been ground down to form particles ranging from 500 nanometres (500 nm = 500×10⁻⁹ metres) to 20 micrometres (20 µm = 20×10⁻⁶ metres), dimensions suitable for both starter fertilisation in the smaller granulometry fractions (i.e., below 1 micron) and gradual release during plant growth (i.e., fractions above 1 micron).

Vegetable oil is a lipid nutrient for plants and microorganisms.

Any mixture in a liquid medium is called a dispersion.

There are three types of dispersions: a) solutions (below 1 nm); b) colloidal dispersions (between 1 and 1000 nm); and c) suspensions (above 1000 nm).

Since the particles in this invention fall within both the colloidal and suspension dispersion ranges, we will refer to them as dispersions or particles dispersed in vegetable oil or in humic and fulvic acids.

Humic and fulvic acids are the most important compounds within the humic fractions, in terms of reactivity and occurrence in ecosystems.

The pH of the fertiliser must be as close to neutral as possible to ensure compatibility with biological inoculants.

For the purposes of this invention, humic and fulvic acids must have low alkalinity and guarantee the following composition: a) 5 wt% total organic carbon; b) 16 wt% total humic extract; c) 15 wt% humic acids; d) 1 wt% fulvic acids; e) 2 wt% total K₂O; f) density of 1.10 g/cm³; g) pH between 7.0 and 10.0.

The composition of this invention also contains microbial inoculants, as it does not negatively affect them and even serves as a nutrient for such microorganisms.

The invention supports and collaborates with the so-called "regenerative agriculture" as presented by Robert Rodale, which aims at the regeneration and maintenance of the entire system of food production from agriculture.

In this context, regenerative agriculture values the microorganisms present in the soil, since they are fundamental for maintaining the land.

The product resulting from the techniques of this invention is subject to registration as for "organic agriculture".

For this reason, one of the mechanisms of this type of agriculture is the development and use of biofertilisers prepared with natural resources, which are then made available to the farmer.

These biofertilisers enrich the soil and benefit the crop with microorganisms, increasing biodiversity.

This invention proposes a solution for oil reuse within a circular economy (ESG) model in agriculture.

This invention therefore belongs to the fields of the chemical and fertiliser industries.

The improvements developed and introduced in the aforementioned composition include innovations that introduce humic and fulvic acids as an alternative vehicle for grinding, which also act as a carbon-providing nutrient for plants.

The present invention introduces features that give the new product agronomic characteristics that make it more efficient and provide another form of carbon relevant to fertilisation.

This addition is detailed further later in this document.

As is known from the original descriptive report of BR1020220248834, it uses thermophosphate, which is a compound calcined at approximately 1,500 °C, and for this reason is devoid of carbon.

In this invention, carbon is added to the fertiliser composition.

The certificate of addition introduced the possibility of using humic and fulvic acids as a wet vehicle for grinding, while also having agronomic action within the fertiliser of this invention.

The invention "BIOFERTILISER COMPOSITION COMPRISING THERMOPHOSPHATE DISPERSED IN EMULSIFIED OIL", in its original documents, comprises a set of chemical components, especially used oil from domestic or industrial frying with micro- and nano-particles of thermophosphate (fused phosphate) in dispersion.

This dispersion will subsequently be diluted in water for application by spraying into the planting furrow or onto plants as a foliar fertiliser.

The composition of this invention also contains microbial inoculants, as it does not negatively affect them and even serves as a nutrient for them.

The invention supports and contributes to the so-called "regenerative agriculture" as presented by Robert Rodale, which aims at the regeneration and maintenance of the entire food production system derived from agriculture.

In this context, regenerative agriculture values the microorganisms present in the soil, as they are fundamental to maintaining the land.

The product resulting from the techniques of this invention is eligible for registration as suitable for "organic agriculture."

For this reason, one of the mechanisms of this type of agriculture is the development and use of biofertilisers prepared with natural resources, which are later made available to the farmer.

These biofertilisers enrich the soil and benefit crops with microorganisms, increasing biodiversity.

This invention proposes a solution for reusing oils in a circular economy (ESG) model in agriculture.

Humic and fulvic acids are soil conditioners; however, in this invention they are used in a novel way as a wet medium aiding the grinding process while also providing nutrients to the fertiliser.

The elemental composition of humic and fulvic acids varies according to studies by various authors.

As a reference, one elemental composition of humic acids is: C₂₀H₅₈O₉₀N₅.

Humic substances are considered a source of energy for beneficial soil organisms, such as algae, fungi, bacteria, and small animals; these organisms do not have photosynthetic structures to capture energy from sunlight and must therefore survive on substances on or in the soil that contain residual carbon, as per: WHITBY, H.; VAN DER BERG, C. M. G. Evidence for copper-binding humic substances in seawater. Journal Marine Chemistry, vol. 173, pp. 282-290, 2015.

In soils that have been leached or do not exhibit chemical reactions-such as sandy soils-the application of organic matter is an excellent method of remineralisation.

Sandy soils do not retain water under and conditions and when humus is lacking.

Humus biomolecules can help retain water and ionised nutrients produced by the natural cycle of organic biomass, compost, or other fertiliser sources.

In the development and maintenance of healthy and sustainable soils, the electronegativity factor of humic acids is used.

Humus is a powerful substance, and a small amount can produce a significantly measurable effect.

Humic acids retain cations (positive ions) in a way that allows them to be more easily absorbed by plant roots, improving micronutrient transfer to the plant's circulatory system.

This works because humic acids (ulmic, humic, and fulvic) attract positive ions and are then drawn to the root depletion zone and to the microtubules of mycorrhizal hyphae.

Humic acids are extremely important as a nutrient transport medium from soil to plant because they can retain ionised nutrients, preventing them from being leached away, which is what happens with water-soluble fertilisers.

Humic acids are also attracted to the plant root depletion zone and, upon reaching the roots, deliver water and nutrients the plant needs.

In summary, the benefits of humic acids in plants are: a) increased nutrient absorption by plants; b) protection from harmful molecules; c) increased soil moisture; d) promotion of microbial growth; e) improvement of soil structure.

In the prior art, thermophosphate is used in dry form, in coarse particles around 150 microns, or mixed within granules

Thermophosphate is very abrasive at this 150-micron granulometry.

Thermophosphate has never been used in foliar or in-furrow liquid applications because when pumped, it damages pumps due to abrasion and cannot pass through the small-diameter spray nozzle openings, causing blockages.

From coarse particles (150 microns), fine grinding enables dispersion using a "top-down" production method.

High energy densities are necessary for such tasks, as achieved in agitator mills.

Wet milling is the primary method for operating agitator mills.

They are used in many branches of industry for grinding raw materials, as well as for dispersing fine pigments and products using the "top-down" method.

Document BR 10 2022 004702 2 (fertiliser seed coating, biodegradable, sustainable, renewable) describes the use of seed coating with struvite and polyol, which is technically quite different from the present invention and presents technical issues such as complex logistics due to the need to coat seeds before application or use, and the requirement to handle and transport a living organism (the seed), which demands additional preservation care.

Document BR 10 2017 024021 5 (seed coating process for dry climates) describes the use of seed coating with calcium sulfate and hydrogel to increase plant drought resistance, which presents technical issues such as difficult logistics due to the need to coat seeds prior to application or use, and the handling and transport of a living organism (the seed), which requires additional preservation care.

Document 10 2017 019126 5 (multi-purpose foliar fertiliser for pastures and crops) describes the use of foliar fertilisers aimed at nourishing both plants and ruminant animals.

This document does not include the use of vegetable oil, humic and fulvic acids, or microorganisms. It presents technical limitations by not being applied to plant roots-where it is most needed-nor being compatible with microorganisms due to being foliar, and it does not supply carbon in the form of lipids to nourish plants and microorganisms.

Document BR 10 2016 022314 8 (use of thermophosphate for seed coating) requires specialised machines for coating and imposes limitations on nutrient quantities so as not to harm germination or vigour. It presents technical issues including the creation of a coated seed that is very abrasive and heavy for transport and application, with complex logistics due to the need to coat seeds before use, and the requirement to handle and transport a living organism (the seed), which requires extra preservation care.

Document BR 10 2014 025472 2 (use of thermophosphate as slow-release fertiliser coating) refers to a technology for coating solid fertiliser granules for gradual release, but it is still dosed in solid form and fully handled in bulk, sacks, or bags.

The following documents demonstrate that microbial inoculants benefit from lipids, one of the foundations of the present invention:
a) LEI L. Fungal invasion: Eat more fat. Nature Plants, vol. 3, June 2017; 17106. doi: 10.1038/nplants.2017.106. PMID: 28650430; available at: https://www.nature.com/articles/nplants2017106;
b) JIANG, Yina, et al. Plants transfer lipids to sustain colonization by mutualistic mycorrhizal and parasitic fungi. Science, vol. 356, pp. 1172-1175, June 2017, DOI: 1 0.1126/science.aam9970; available at: https://www.science.org/doi/10.1126/science.aam9970;
c) LUGINBUEHL, Leoni H., et al. Fatty acids in arbuscular mycorrhizal fungi are synthesized by the host plant. Science, vol. 356, pp. 1175-1178, June 2017, DOI: 10.1126/science.aan0081; available at: https://www.science.org/doi/abs/10.1126/science.aan0081.

This invention also follows the principle of using micro- and nanoparticles in fertilisers as presented in the article: a) Bhardwaj, A.K., Arya, G., Kumar, R. et al. Switching to nanonutrients for sustaining agroecosystems and environment: the challenges and benefits in moving up from ionic to particle feeding. Journal of Nanobiotechnol., vol. 20, article 19, 2022; available at: https://doi.org/10.1186/s12951-021-01177-9.

If one attempts to disperse the micro- and nano-ground fertiliser with microorganisms in water, there is a risk of contamination by unwanted microorganisms, requiring the use of microbicidal preservatives, which renders the use of the desired microbial inoculants unfeasible.

If one attempts to disperse the simple micro- and nano-ground fertiliser in water, severe sedimentation will occur, altering component concentrations within the packaging, which compromises product quality by impairing microbial protection due to poor oil film formation and by increasing difficulty during application/spraying.

In the prior art, there is no product comprising thermophosphate, dicalcium phosphate, or micro- and nano-ground phosphate rock "dispersed in used or virgin vegetable oil" or "dispersed in humic and fulvic acids" and simultaneously containing microbial inoculants.

### Description of the invention

Thermophosphate is usually applied in the field as a dry powder with mesh size 40 to 100 or mixed in granules with other fertilisers.

The final product of this invention comprises a finely ground fertiliser dispersed in a water-soluble vegetable oil or in humic and fulvic acids containing microbial inoculants.

The invention involves micro- and nano-grinding thermophosphate in water-soluble vegetable oil or in humic and fulvic acids so that the particles remain dispersed together with microorganisms and, when diluted in water, form a nutrient dispersion (lipids) for the microorganisms and dispersed particles as nutrients for the plants, thus feeding both the plant and the microorganisms.

The oil emulsified in water also acts as a spreading surfactant during foliar application, facilitating coverage on the leaf surface.

Emulsifying the oil in the composition with water facilitates dispersion, reduces drift during application (loss due to wind during spraying), and acts as a spreading adjuvant on the leaf surface.

In this new inventive concept, vegetable oil or humic and fulvic acids are used as sources of carbon (which is a nutrient for the microorganisms) and as the vehicle for micro- and nano-grinding, generating an oil-based dispersion of thermophosphate particles and microorganisms, while also protecting the microorganisms from contact with air by encapsulating them in the oil.

The thickener required for the product of this invention may be based on clays such as organophilic bentonites, and/or attapulgite, and/or pyrogenic silica.

This configuration eliminates the need for the entire seed coating process, as described, for example, in documents BR 10 2017 024021 5, BR 10 2017 024021 5, and BR 10 2017 024021 5.

The vegetable oil contains a phospholipid that serves as a nutrient for plants and microorganisms, acting as a source of carbon and phosphorus for the microorganisms and as a carrier for the micro- and nano-ground thermophosphate.

The oil to be used includes used frying oil, providing an excellent regenerative destination for this environmental liability, as well as corn oil (a by-product of alcohol production), cottonseed oil, canola oil, palm oil, and sunflower oil.

The vegetable oil should preferably be used frying oil with the moisture removed by evaporation and the residues removed by filtration.

Solubilising agents make the vegetable oil water-soluble, allowing the final product of this invention to be diluted in water, thereby facilitating transport (reduced volume and weight) and enabling easy adjustment of dosage and viscosity/flow in the field at the time of use.

Micro- and nano-ground thermophosphate in vegetable oil facilitates grinding in an agitator mill with zirconium or ceramic beads, forming a paste that keeps the particles dispersed in the oil without sedimentation.

The vegetable oil serves as a nutrient for the microorganisms, encapsulating the fungi and bacteria, protecting them from contact with air and/or water, thereby preventing harmful contamination, and also acts as a spreader and adjuvant in the product.

Pyrogenic silica is used as a thickener, serving to protect against diseases caused by fungi (such as Rust) and insects, as it is known to trigger immune responses in plants.

Amorphous silicas, such as pyrogenic silica, are also known to act as nutrients by providing silicon to the plant.

The emulsifier, based on sorbates and lipids, is derived from sugars and oils that also serve as sources of carbon for the microorganisms in the product.

The present invention also avoids handling seeds, which, being living organisms, may suffer damage that affects their vigour and germination.

The properties of nanoparticles (NPs) are attributed to their high surface area-to-volume ratio, which increases their chemical reactivity as well as physical responses, meaning that a smaller amount of nanomaterial can perform the same or even a better job than its bulk counterparts (BHARDWAJ, et al., 2022).

This fact results in a saving of material to be extracted from nature and applied to crops, thereby reducing the depletion of the planet's abiotic resources (BHARDWAJ, et al., 2022).

Like many other sectors, fertiliser research and development has also adopted nanotechnology to overcome the challenges and criticism faced by the industry and the agricultural community regarding the indiscriminate exploitation of natural resources (BHARDWAJ, et al., 2022).

In the agricultural sector, nanofertilisers are the most sought-after product of nanotechnology and are motivated by the controlled and prolonged release of nutrients in response to signals (such as temperature or pH), or simply to shift to a more efficient application method (e.g., foliar application) to increase nutrient uptake efficiency and reduce losses (BHARDWAJ, et al., 2022).

A small amount of nanofertiliser is sufficient to meet the required production target compared to conventional fertilisers, which require heavy application (BHARDWAJ, et al., 2022).

Nanofertilisers can increase nutrient availability to plants, minimise nutrient losses due to leaching, and have minimal environmental impact; overall, the goal is to minimise energy use, reduce environmental nutrient losses, and achieve this without sacrificing (or better yet, improving) crop productivity (BHARDWAJ, et al., 2022).

However, the prior art describes predominantly chemical fertilisers, which do not allow for the simultaneous use of bio-inputs (especially inoculant microorganisms) in an efficient and economical way, unlike the invention "BIOFERTILISER COMPOSITION COMPRISING FUSED PHOSPHATE DISPERSED IN EMULSIFIED OIL," which offers a way to apply fertilisers associated with microorganisms and lipids.

The invention does not harm the microorganisms because the micro- and nano-ground fused phosphate is slow-release and composed of water-insoluble particles - in other words, inert substances that do not alter the pH or salinity of the aqueous medium during storage or application.

This invention includes innovation that allows the product, at the time of application, to be easily diluted in water for spraying either in the planting furrow or over the plants (as a foliar fertiliser).

The nutrients in the fused phosphate are thermally fused and entirely present in the form of amorphous micro- and nanoparticles, which provide a suitable environment for microorganisms that aggregate through polar attraction.

By grinding the material into micro- and nanoparticles, the efficiency of the fused phosphate is increased, and each particle has exactly the same composition as the batch produced in the furnace, without segregation.

This invention reduces the need for fertilisers and pesticides due to plant absorption of the nano-silica present in the fused phosphate.

### Examples of invention realisations

The production process involves adding the fused phosphate into water-soluble vegetable oil or into humic and fulvic acids under constant agitation, and passing it through an agitator mill with zirconium beads in a closed circuit, which may be repeated several times until reaching a particle size between 500 nm and 20 µm.

After reaching the desired particle size, the inoculant microorganisms are added, followed by the emulsifier and then the thickener until the desired viscosity is obtained, and finally the product is packaged.

The composition of the product of this invention comprises, by weight percentage (%w): a) fused phosphate from 40 to 60%w; b) oil from 30 to 40%w, including vegetable oils used in frying such as soybean oil, corn oil (a by-product of alcohol production), cottonseed oil, canola oil, palm oil, and sunflower oil; c) emulsifier: polysorbate 80 from 2 to 5%w; d) thickener: organophilic bentonites from 2 to 5%w; e) inoculant microorganisms (fungi and bacteria) from 2 to 5%w.

### Variants

As a variant, virgin oils may be used.

The composition comprises, by weight percentage (%w): a) fused phosphate from 40 to 60%w; b) oil from 30 to 40%w, including virgin vegetable oils such as soybean oil, corn oil (a by-product of alcohol production), cottonseed oil, canola oil, palm oil, and sunflower oil; c) emulsifier: polysorbate 80 from 2 to 5%w; d) thickener: organophilic bentonites from 2 to 5%w; e) inoculant microorganisms (fungi and bacteria) from 2 to 5%w.

Other variants relate to the micro- and nano-ground fertilisers that may be used in the composition.

Dicalcium phosphate, magnesium phosphate, and natural phosphate (phosphate rock) are variants that may replace fused phosphate in the formulation.

In this way, the compositions disclosed and claimed by this invention are described below.

FERTILISER COMPOSITION, characterised by comprising, by weight percentage (%w):
a) fused phosphate from 40 to 60%w;
b) vegetable oil from household or industrial frying, from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraph [113],
characterised by presenting a first variant comprising:
a) dicalcium phosphate from 40 to 60%w;
b) vegetable oil from household or industrial frying, from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraph [113],
characterised by presenting a second variant comprising:
a) magnesium phosphate from 40 to 60%w;
b) vegetable oil from household or industrial frying, from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraph [113],
characterised by presenting a third variant comprising:
a) natural phosphate (phosphate rock), from 40 to 60%w;
b) vegetable oil from household or industrial frying, from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraphs [113] to [116],
characterised by presenting a fourth variant where the used frying oil is replaced in the composition with vegetable oils, comprising:
a) corn oil (a by-product of alcohol production) from 30 to 40%w, or;
b) virgin soybean oil from 30 to 40%w, or;
c) virgin cottonseed oil from 30 to 40%w, or;
d) virgin canola oil from 30 to 40%w, or;
e) virgin palm oil from 30 to 40%w, or;
f) virgin sunflower oil from 30 to 40%w.

FERTILISER COMPOSITION, according to paragraph [113],
characterised by presenting a fifth variant comprising:
a) fused phosphate from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraph [113],
characterised by presenting a sixth variant comprising:
a) dicalcium phosphate from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraph [113],
characterised by presenting a seventh variant comprising:
a) magnesium phosphate from 40 to 60%w;
b) humic and fulvic acids from 30 to 40%w;
c) emulsifier: polysorbate 80 from 2 to 5%w;

FERTILISER COMPOSITION, according to paragraph [113],
characterised by presenting an eighth variant comprising:
a) natural phosphate (phosphate rock), from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

FERTILISER COMPOSITION, according to paragraphs [113] to [116],
characterised by presenting a fourth variant where used frying oil is replaced in the composition by humic and fulvic acids, comprising:
a) humic and fulvic acids from 30 to 40%w

## Claims

1. FERTILISER COMPOSITION, **characterised by** comprising, in weight percentage (%w):
a) micronised and nanonised fused phosphate from 40 to 60%w;
b) vegetable oil derived from household or industrial frying from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

2. FERTILISER COMPOSITION, according to claim 1, **characterised by** presenting a first variant comprising:
a) micronised and nanonised dicalcium phosphate from 40 to 60%w;
b) vegetable oil derived from household or industrial frying from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

3. FERTILISER COMPOSITION, according to claim 1, **characterised by** presenting a second variant comprising:
a) micronised and nanonised magnesium phosphate from 40 to 60%w;
b) vegetable oil derived from household or industrial frying from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

4. FERTILISER COMPOSITION, according to claim 1, **characterised by** presenting a third variant comprising:
a) micronised and nanonised natural phosphate (phosphate rock) from 40 to 60%w;
b) vegetable oil derived from household or industrial frying from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

5. FERTILISER COMPOSITION, according to claims 1 to 4, **characterised by** presenting a fourth variant in which, instead of using frying oil, the composition uses vegetable oils, comprising:
a) corn oil, a by-product of ethanol production, from 30 to 40%w, or;
b) virgin soybean oil from 30 to 40%w, or;
c) virgin cottonseed oil from 30 to 40%w, or;
d) virgin canola oil from 30 to 40%w, or;
e) virgin palm oil from 30 to 40%w, or;
f) virgin sunflower oil from 30 to 40%w.

6. FERTILISER COMPOSITION, according to claim 1, **characterised by** presenting a fifth variant comprising:
a) micronised and nanonised fused phosphate from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

7. FERTILISER COMPOSITION, according to claim 1, **characterised by** presenting a sixth variant comprising:
a) micronised and nanonised dicalcium phosphate from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

8. FERTILISER COMPOSITION, according to claim 1, **characterised by** presenting a seventh variant comprising:
a) micronised and nanonised magnesium phosphate from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

9. FERTILISER COMPOSITION, according to claim 1, **characterised by** presenting its eighth variant comprising:
a) micronised and nanonised natural phosphate (phosphate rock) from 40 to 60%w;
b) humic and fulvic acids from 30 to 40%w;
c) emulsifier: polysorbate 80 from 2 to 5%w;
d) thickener: pyrogenic silica or organophilic bentonites from 2 to 5%w;
e) inoculant microorganisms (fungi and bacteria) from 2 to 5%w.

10. FERTILISER COMPOSITION, according to claims 1 to 4, **characterised by** presenting its fourth variant in which the used frying oil is replaced in the composition by humic and fulvic acids, comprising:
a) humic and fulvic acids from 30 to 40%w.
